# FASCICULE DE BREVET EUROPEEN

(11) **EP 3 277 542 B1**
(45) Date de publication et mention de la délivrance du brevet: **09.01.2019**
(21) Numéro de dépôt: 16717674.2
(22) Date de dépôt: 24.03.2016
(51) Int. Cl.: B60R 16/02, H02G 3/32

(54) **ENSEMBLE POUR LE PASSAGE D'UN HARNAIS ELECTRIQUE DANS UNE TURBOMACHINE**
DURCHGANGSANORDNUNG FÜR EINEN KABELBAUM IN EINEM TRIEBWERK
PASSAGE ASSEMBLY FOR A WIRE HARNESS IN A JET ENGINE

(30) Priorité: 31.03.2015 FR 1552763
(43) Date de publication de la demande: 07.02.2018
(73) Titulaire: SAFRAN AIRCRAFT ENGINES, 75015 Paris (FR)
(72) Inventeur: KWAKYE, George, 77550 Moissy-Cramayel (FR); KIEFFER, Benoit Marie Bernard, 77550 Moissy-Cramayel (FR); MATIAS, Antonio, 77550 Moissy-Cramayel (FR)
(74) Mandataire: Jolly, Christophe
(86) Numéro de dépôt international: PCT/FR2016/050661
(87) Numéro de publication internationale: WO 2016/156706

(56) Documents cités:
- WO-A2-00/19082
- FR-A1- 2 958 373
- FR-A1- 2 990 745
- FR-A1- 2 990 805
- FR-A1- 2 996 070
- US-B1- 6 359 223

## Description

La présente invention concerne un ensemble pour le passage d'un harnais électrique au travers d'une paroi, en particulier, dans un carter intermédiaire de turbomachine, comme par exemple décrit dans FR2990745. Elle concerne également un carter et une turbomachine comprenant un tel un carter ou un tel ensemble.

D'une manière connue, une turbomachine comprend un carter intermédiaire agencé entre un compresseur basse pression amont et haute pression aval. Le carter intermédiaire comprend une pluralité de bras radiaux joignant des parois de révolution concentriques destinées à former des surfaces délimitant intérieurement et extérieurement les flux d'air d'écoulement primaire et secondaire. Les bras radiaux permettent le passage de servitudes telles que des harnais électriques notamment, qui cheminent depuis l'intérieur de la turbomachine jusqu'à un boîtier d'accessoires porté par la nacelle de la turbomachine et agencé radialement à l'extérieur du flux d'air secondaire.

Un harnais électrique comprend habituellement des câbles électriques comportant une couche extérieure isolante électriquement, ces câbles étant recouverts notamment d'une gaine textile permettant de limiter l'usure des couches isolantes puis, extérieurement à la gaine textile, d'une gaine métallique destinée à protéger les signaux électriques des perturbations électromagnétiques environnantes. Cette gaine métallique est habituellement recouverte d'un manchon thermorétractable destiné à réduire l'usure de la gaine métallique.

Pour réaliser le passage des câbles électriques, au travers des parois de révolution, le harnais électrique est inséré dans un embout métallique engagé dans un orifice d'une paroi de révolution du carter intermédiaire. Un manchon en matériau thermorétractable est utilisé de part et d'autre de la paroi. Un premier manchon recouvre une extrémité de l'embout métallique et une partie de la longueur axiale de la gaine métallique. De même, de l'autre côté de la paroi un second manchon recouvre une extrémité de l'embout métallique et une partie de la longueur axiale de la gaine métallique.

En fonctionnement, la température de l'air dans les bras de carter situés dans la veine d'air secondaire est inférieure à la température de l'air dans l'espace inter-veine (entre la veine annulaire primaire et la veine annulaire secondaire), de sorte qu'il est possible d'utiliser un manchon en matériau thermorétractable dont la tenue en température est inférieure à la tenue en température du matériau thermorétractable utilisé dans l'espace inter-veine.

Toutefois, il a été constaté que des phénomènes de conduction thermique dans l'embout métallique peuvent conduire à une augmentation importante de la température du manchon thermorétractable utilisé dans le bras de carter de la veine secondaire, ce qui peut conduire à son auto-inflammation.

L'invention a notamment pour but d'apporter une solution simple, efficace et économique aux problèmes de l'art antérieur décrit précédemment.

A cet effet, elle propose un ensemble pour le passage d'un harnais électrique au travers d'une paroi comprenant un embout métallique tubulaire traversant de part et d'autre la paroi et logeant le harnais électrique, un manchon en matériau thermorétractable s'étendant autour d'une partie d'extrémité de l'embout tubulaire et du harnais électrique, caractérisé en ce qu'il comprend des moyens d'extraction de la chaleur de l'embout tubulaire qui sont agencés du côté de l'embout entouré par le manchon thermorétractable.

L'invention propose d'intégrer des moyens d'extraction de chaleur à au niveau de l'embout de manière à limiter la transmission de chaleur à la gaine thermorétractable et ainsi éviter son auto-inflammation en fonctionnement.

Préférentiellement, l'embout tubulaire comprend une collerette annulaire appliquée sur la paroi et disposée entre la paroi et lesdits moyens d'extraction de la chaleur. La collerette assure une mise en position de l'embout dans l'orifice de la paroi en venant en butée sur la paroi.

Selon une autre caractéristique de l'invention, les moyens d'extraction de la chaleur comprennent une gaine métallique de recouvrement entourant intégralement le manchon thermorétractable et fixée à une première extrémité située du côté de la paroi par serrage sur l'embout tubulaire.

L'utilisation d'une gaine métallique permet d'effectuer une conduction de la chaleur vers la gaine métallique entourant la gaine thermorétractable plutôt que vers le manchon thermorétractable. De plus, la gaine métallique assure un confinement du manchon thermorétractable en limitant la quantité d'oxygène au contact du manchon, ce qui permet de réduire encore les risques d'auto-inflammation du manchon.

Selon une autre caractéristique de l'invention, ladite première extrémité de la gaine métallique de recouvrement est repliée sur elle-même radialement vers l'intérieur et serrée par un premier organe intercalé radialement entre la première extrémité recourbée et le reste de la gaine métallique de recouvrement.

Un second organe de serrage peut être appliqué sur une seconde extrémité de la gaine métallique de recouvrement opposée à la première extrémité qui est en contact avec le manchon thermorétractable.

Selon encore une autre caractéristique de l'invention, ladite gaine métallique est réalisée dans un matériau dont la conductivité thermique est supérieure à celle de l'embout tubulaire.

La gaine métallique peut être une tresse métallique.

Dans une réalisation de l'invention, les moyens d'extraction de chaleur comprennent des rainures annulaires disposées en alternance, selon l'axe de l'embout, avec des nervures annulaires de l'embout.

L'invention concerne également un carter, en particulier un carter intermédiaire pour une turbomachine, comprenant un ensemble du type décrit précédemment, dans lequel ladite paroi est une paroi sensiblement cylindrique délimitant la surface radialement interne d'écoulement d'un flux de gaz.

L'invention concerne encore une turbomachine telle qu'un turboréacteur, caractérisée en ce qu'elle comprend un ensemble tel que décrit ci-dessus ou un carter comme décrit au paragraphe précédent.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en coupe axiale d'une turbomachine à double flux selon la technique connue ;
- la figure 2 est une vue schématique d'un bras d'un carter intermédiaire d'une turbomachine ;
- la figure 3 est une vue schématique en coupe d'un ensemble selon un premier mode de réalisation de l'invention ;
- la figure 4 est une vue schématique en coupe axiale selon un second mode de réalisation de l'invention ;
- les figures 5 et 6 sont des vues schématiques de deux variantes de réalisations du second mode de réalisation.

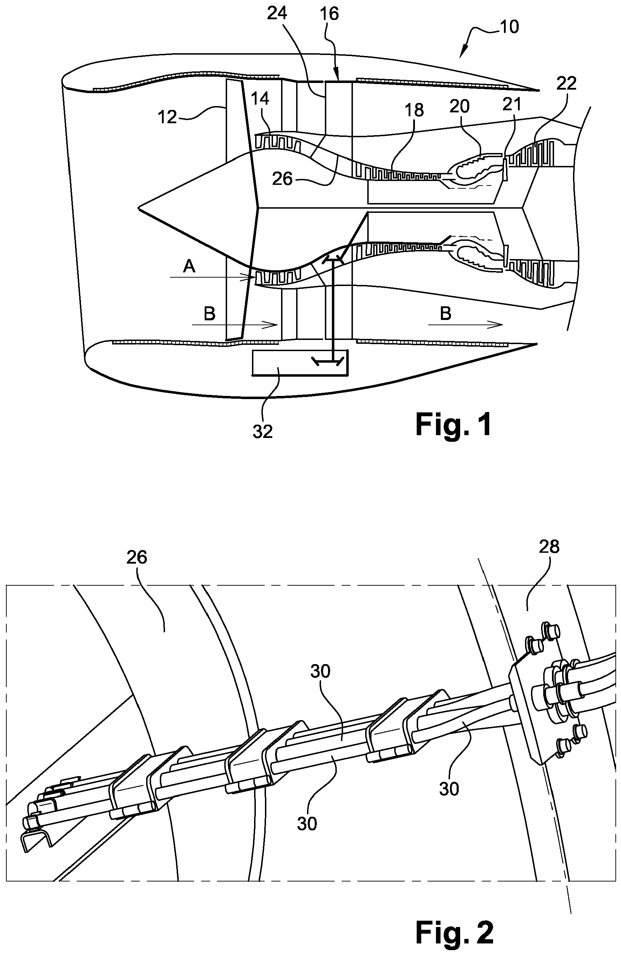

On se réfère tout d'abord à la figure 1, qui représente une turbomachine 10 comprenant d'amont en aval une soufflante 12, un compresseur basse pression 14, un carter intermédiaire 16, un compresseur haute pression 18, une chambre de combustion 20, une turbine haute pression 21 et une turbine basse pression 22. L'air entrant dans la turbomachine se divise en un flux d'air primaire (flèche A) qui circule à l'intérieur des compresseurs basse et haute pression 14, 18 vers la chambre de combustion 20 puis à travers les turbines haute et basse pression 21, 22, et en un flux d'air secondaire (flèches B) qui contourne le compresseur 14, 18, la chambre de combustion 20 et la turbine 21, 22.

Le carter intermédiaire 16 comprend des bras structuraux 24 s'étendant radialement vers l'extérieur. Le carter intermédiaire 16 comprend une paroi de révolution interne 26 délimitant extérieurement la veine d'écoulement du flux d'air primaire et une paroi de révolution 28 externe délimitant intérieurement la veine d'écoulement du flux d'air secondaire.

Certains des bras radiaux 24 tels que par exemple celui agencé angulairement à trois heures par rapport au cadran d'une montre, lorsque l'on regarde la turbomachine depuis l'amont, comprennent des harnais 30 électriques de passages de câbles électriques (figure 2). Ces harnais 30 cheminent depuis un équipement jusqu'à un boîtier d'accessoires 32 comme représenté en figure 1.

Chaque harnais électrique 30 comprend un ensemble de câbles électriques qui sont recouverts d'une gaine textile elle-même recouverte d'une gaine métallique interne puis d'un manchon.

Les câbles électriques cheminent à travers un orifice de la paroi de révolution externe 28 dans un embout tubulaire 34, de préférence métallique, par exemple en acier inoxydable, d'axe 35. La paroi 28 est réalisée en deux demi-pièces, de préférence en alliage d'aluminium, qui bloquent l'embout 34 longitudinalement selon la direction de l'axe 35. A cette fin, les deux demi-pièces peuvent comprendre une découpe de forme complémentaire à une section transversale rétrécie de l'embout. Dans une telle réalisation, il n'est pas nécessaire de réaliser un embout 34 fileté extérieurement et de fixer l'embout 34 par rapport à la paroi 28 par l'intermédiaire d'un écrou vissé sur le filetage de l'embout.

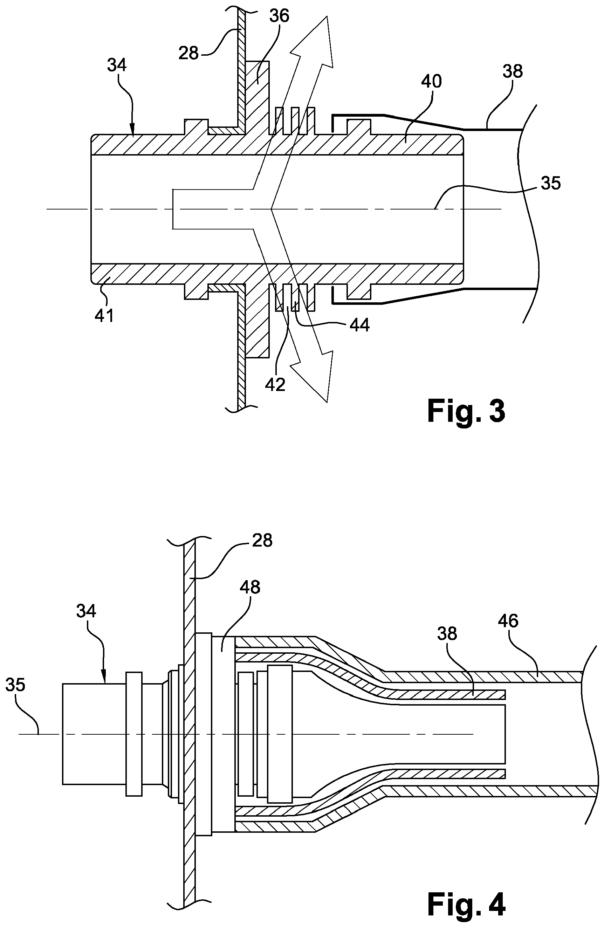

Selon l'invention, des moyens d'extraction de la chaleur sont prévus. Ainsi, dans un premier mode de réalisation de l'invention représenté en figure 3, l'embout tubulaire 34 comprend une collerette annulaire 36 appliquée sur la face externe de la paroi de révolution externe 28. Le harnais électrique 30 engagé dans l'embout tubulaire 34 est recouvert par un manchon 38 en matériau thermorétractable, de préférence en matériau fluoro-élastomère, qui recouvre également une première partie d'extrémité 40 de l'embout 34 située du côté de la collerette 36 par rapport à la paroi 28. L'embout 34 comprend en outre une deuxième extrémité 41 située du côté opposé de la collerette 36 par rapport à la paroi 28. Les parties d'extrémité 40 et 41 sont reliées entre elles. L'embout 34 est bloqué au moins en translation par rapport la paroi 28 suivant l'axe 35. Il peut être soudé sur la paroi 28 ou bien monté libre en rotation par rapport à la paroi 28 autour de l'axe 35.

Les moyens d'extraction de la chaleur sont agencés selon l'axe du manchon entre la collerette annulaire 36 et l'extrémité du manchon recouvrant la partie d'extrémité 40 de l'embout 34. Ces moyens d'extraction de la chaleur comprennent des rainures annulaires 42 et des nervures annulaires 44 de l'embout. Les rainures 42 sont disposées en alternance selon l'axe 35 de l'embout 34 avec les nervures annulaires 44 de manière à former un moyen d'échange de chaleur. Les nervures 44 sont de préférence venues de matière avec la première partie d'extrémité 40. Avantageusement, la collerette 36 est disposée entre la paroi et les nervures 44.

Ainsi, en fonctionnement, lorsque de la chaleur circule par conduction thermique dans l'embout 34, de préférence métallique, les rainures 42 et nervures 44 assurent un échange de chaleur avec l'air ambiant extérieur limitant la quantité de chaleur circulant jusqu'au manchon thermorétractable 38.

Selon un second mode de réalisation représenté en figure 4, les moyens d'extraction de chaleur comprennent une gaine métallique externe de recouvrement 46, par exemple en cuivre nickelé qui recouvre le manchon thermorétractable 38 et qui est fixée à son extrémité située du côté de la paroi 28 par serrage à l'embout métallique tubulaire au moyen d'un collier 48.

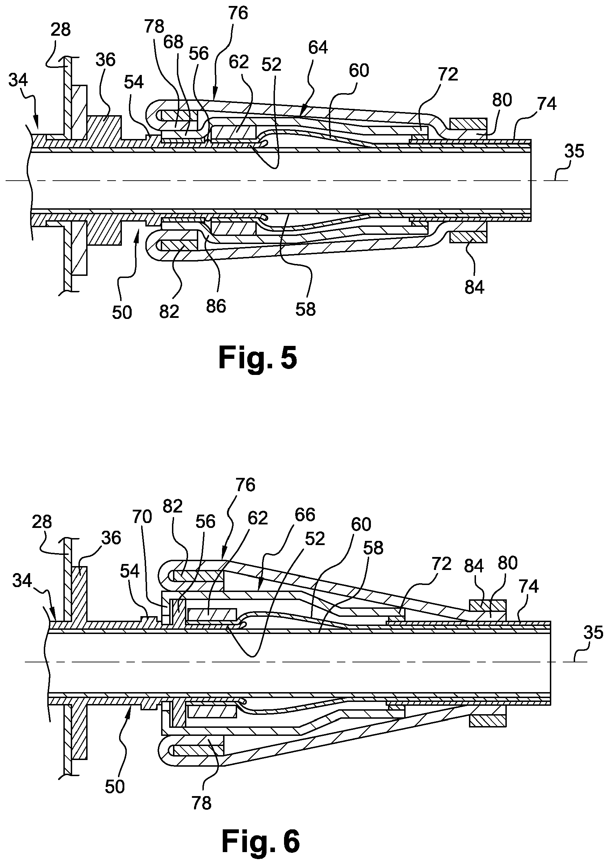

Plus particulièrement, les figures 5 et 6 montrent deux variantes du second mode de réalisation.

De manière similaire à ce qui a été décrit précédemment, l'embout 34 comprend une collerette annulaire 36. La partie d'extrémité 50 de l'embout 34, disposée du côté de la collerette 36 par rapport à la paroi 28, comprend une portion d'extrémité 52 cylindrique et deux nervures annulaires 54, 56, agencées radialement extérieurement à partir de la partie d'extrémité 50 et espacées axialement l'une de l'autre selon l'axe 35 et agencées entre la portion cylindrique 52 et la collerette annulaire 36. Comme indiqué précédemment, les câbles électriques sont entourés extérieurement par une gaine textile 58 qui est insérée dans l'embout tubulaire 34. Une gaine métallique interne 60 entoure la gaine textile 58 pour limiter son usure et assure une protection électromagnétique des câbles électriques. L'extrémité de la gaine métallique interne 60 entoure la portion cylindrique 52 d'extrémité de l'embout 34 et est serrée sur la portion cylindrique 52 par un collier de serrage 62 par exemple.

Un manchon thermorétractable 64, 66 est fixé par collage à une première extrémité 68, 70 sur la partie d'extrémité 50 de l'embout tubulaire 34 entre les deux rainures annulaires 54, 56 et pour une deuxième extrémité 72 opposée sur une extrémité libre d'une gaine 74 de protection thermique entourant extérieurement la gaine métallique interne 60. La gaine 74 peut être, par exemple, réalisée cuivre nickelé.

Dans les deux variantes de l'invention représentées aux figures 5 et 6, les moyens d'extraction de chaleur comprennent une gaine 76 métallique de recouvrement disposée du côté de la collerette 36 par rapport à la paroi 28 et entourant intégralement le manchon 64, 66. Ladite gaine métallique 76 de recouvrement comprend une première extrémité 78 située à proximité de la collerette annulaire 36 et une seconde extrémité 80 située à l'opposé, c'est-à-dire éloignée de la collerette.

La première extrémité 78 de la gaine 76 de recouvrement est repliée ou recourbée sur elle-même radialement à 180° vers l'intérieur et est fixée par un premier organe de serrage 82 tel qu'un collier sur la première extrémité 68, 70 du manchon 64, 66. Ledit premier organe 82 de serrage est ainsi intercalé entre la première extrémité 78 repliée et le reste de la gaine 76. La seconde extrémité 80 de la gaine 76 de recouvrement, qui n'est pas repliée, est fixée par serrage au moyen d'un collier 84 par exemple sur la deuxième extrémité libre 80 de la gaine 74 de protection thermique entourant extérieurement la gaine métallique interne 60.

Ainsi, selon l'invention, la gaine 76 métallique de recouvrement assure un confinement du manchon thermorétractable 64, 66 limitant l'apport d'oxygène nécessaire à une auto-inflammation du manchon thermorétractable 64, 66. La gaine métallique externe de recouvrement 76 permet également une diffusion efficace de la chaleur radialement vers l'extérieur, ce qui limite la concentration de chaleur de l'embout métallique tubulaire, de préférence métallique, au niveau du manchon 64, 66 et également au niveau de la paroi 28. Bien qu'il n'y ait pas de contact entre la partie d'extrémité 50 de l'embout tubulaire 34 et la gaine métallique 76, le manchon 64, 66 assure la diffusion de chaleur jusqu'à la gaine 76 qui rayonne la chaleur vers l'extérieur.

Dans une variante, il serait possible de fixer la gaine métallique de recouvrement 76 directement sur la partie d'extrémité 50 de l'embout 34 pour réaliser un meilleur transfert de chaleur.

Les réalisations des figures 5 et 6 diffèrent essentiellement par le fait que le manchon 64 est en appui extérieurement sur le collier 62 de serrage dans le cas de la réalisation de la figure 5 alors que le manchon 66 est situé à distance du collier 62 dans le cas de la réalisation de la figure 6, ce qui permet d'éviter l'usure du manchon 66 sur le collier 62. Le manchon 64 de la réalisation de la figure 5 comprend ainsi un ressaut annulaire 86 qui n'est pas présent dans la réalisation de la figure 6. L'empilement des couches du harnais est plus simple à réaliser avec la réalisation de la figure 5 qu'avec la réalisation de la figure 6. En figure 6, le bout de la première extrémité 70 du manchon 66 s'étend en direction radialement vers l'intérieur dans le cas de la réalisation de la figure 6 et s'étend de manière cylindrique dans le cas de la figure 5. De plus, dans cette dernière réalisation, le collier de serrage 62 n'est pas en contact avec le manchon 66, ce qui limite les frottements du manchon sur le collier 62 et par voie de conséquence l'usure du manchon 66.

Dans la description qui précède, le choix des matériaux de la gaine métallique de recouvrement 76 et de l'embout tubulaire 34 est tel que ladite gaine métallique de recouvrement est réalisée dans un matériau dont la conductivité thermique est supérieure à celle dudit embout.

De préférence, la gaine métallique de recouvrement 76 est réalisée dans un matériau de type tresse métallique en cuivre nickelé ou en alliage à base de cuivre, alors que l'embout tubulaire est réalisé en acier inoxydable.

Ainsi, en fonctionnement, lorsque de la chaleur circule par conduction thermique dans l'embout 34, l'extraction de la chaleur depuis l'embout vers la gaine métallique de recouvrement 76 est facilitée. Par échange de chaleur avec l'air ambiant extérieur, la quantité de chaleur circulant jusqu'au manchon thermo-rétractable 64, 66 est sensiblement limitée.

## Revendications

1. Ensemble pour le passage d'un harnais électrique au travers d'une paroi (28) comprenant un embout (34) métallique tubulaire traversant de part et d'autre la paroi (28) et logeant le harnais électrique, un manchon en matériau thermorétractable (38, 64, 66) s'étendant autour d'une partie d'extrémité (40, 50) de l'embout tubulaire (34) et du harnais électrique, **caractérisé en ce qu'**il comprend des moyens d'extraction de la chaleur (42, 44 ,46, 76) de l'embout tubulaire qui sont agencés du côté de l'embout (34) entouré par le manchon thermorétractable (38, 64, 66).

2. Ensemble selon la revendication 1, **caractérisé en ce que** l'embout tubulaire (34) comprend une collerette annulaire (36) appliquée sur la paroi (28) et disposée entre la paroi (28) et lesdits moyens d'extraction de la chaleur.

3. Ensemble selon la revendication 1 ou 2, **caractérisé en ce que** les moyens d'extraction de la chaleur comprennent une gaine métallique externe (46, 76) de recouvrement entourant intégralement le manchon thermorétractable (38, 64, 66) et fixée à une première extrémité (78) située du côté de la paroi par serrage sur l'embout tubulaire (34).

4. Ensemble selon la revendication 3, **caractérisé en ce que** ladite première extrémité (78) de la gaine (76) métallique de recouvrement est repliée sur elle-même radialement vers l'intérieur et serrée par un premier organe (82) intercalé radialement entre la première extrémité (78) recourbée et le reste de la gaine métallique (76) de recouvrement.

5. Ensemble selon la revendication 4, **caractérisé en ce qu'**un second organe (84) de serrage est appliqué sur une seconde extrémité (80) de la gaine métallique (76) de recouvrement opposée à la première extrémité (78) qui est en contact avec le manchon thermorétractable (64, 66).

6. Ensemble selon l'une des revendications 3 à 5, **caractérisé en ce que** ladite gaine métallique de recouvrement (76) est réalisée dans un matériau dont la conductivité thermique est supérieure à celle de l'embout tubulaire.

7. Ensemble selon l'une des revendications 3 à 6, **caractérisé en ce que** la gaine métallique (76) est une tresse métallique.

8. Ensemble selon la revendication 2, **caractérisé en ce que** les moyens d'extraction de chaleur comprennent des rainures annulaires (42) disposées en alternance selon l'axe de l'embout (34) avec des nervures annulaires (44) de l'embout (34).

9. Carter, en particulier un carter intermédiaire pour une turbomachine, comprenant un ensemble selon l'une des revendications 1 à 8, dans lequel ladite paroi est une paroi (28) sensiblement cylindrique délimitant la surface radialement interne d'écoulement d'un flux de gaz.

10. Turbomachine, telle qu'un turboréacteur, **caractérisée en ce qu'**elle comprend un ensemble selon l'une des revendications 1 à 8 ou un carter selon la revendication 9.

## Patentansprüche

1. Anordnung für den Durchgang eines elektrischen Kabelbaums durch eine Wand (28), enthaltend ein rohrförmiges Metallendstück (34), das die Wand (28) auf beiden Seiten durchsetzt und den elektrischen Kabelbaum aufnimmt, eine Hülse aus wärmeschrumpfbarem Material (38, 64, 66), die sich um einen Endabschnitt (40, 50) des rohrförmigen Endstücks (34) und des elektrischen Kabelbaums erstreckt, **dadurch gekennzeichnet, dass** sie Wärmeableitmittel (42, 44, 46, 76) zum Ableiten von Wärme von dem rohrförmigen Endstück enthält, die auf der Seite des Endstücks (34) angeordnet sind, die von der wärmeschrumpfbaren Hülse (38, 64, 66) umgeben wird.

2. Anordnung nach Anspruch 1, **dadurch gekennzeichnet, dass** das rohrförmige Endstück (34) einen ringförmigen Kragen (36) enthält, der an die Wand (28) angesetzt ist und zwischen der Wand (28) und den Wärmeableitmitteln angeordnet ist.

3. Anordnung nach Anspruch 1 oder 2, **dadurch gekennzeichnet, dass** die Wärmeableitmittel einen äußeren, metallischen Abdeckmantel (46, 76) enthalten, welcher die wärmeschrumpfbare Hülse (38, 64, 66) integral umgibt und mit einem auf der Seite der Wand liegenden ersten Ende (78) durch Verspannen an das rohrförmige Endstück (34) befestigt ist.

4. Anordnung nach Anspruch 3, **dadurch gekennzeichnet, dass** das erste Ende (78) des metallischen Abdeckmantels (76) radial nach innen auf dieses selbst umgelegt ist und über ein erstes Organ (82), das radial zwischen dem umgebogenen ersten Ende (78) und dem restlichen metallischen Abdeckmantel (76) eingesetzt ist, verspannt ist.

5. Anordnung nach Anspruch 4, **dadurch gekennzeichnet, dass** ein zweites Spannorgan (84) an ein zweites Ende (80) des metallischen Abdeckmantels (76) angesetzt ist, das dem ersten Ende (78) entgegengesetzt ist, das mit der wärmeschrumpfbaren Hülse (64, 66) in Kontakt steht.

6. Anordnung nach einem der Ansprüche 3 bis 5, **dadurch gekennzeichnet, dass** der metallische Abdeckmantel (76) aus einem Material hergestellt ist, dessen Wärmeleitfähigkeit höher als die des rohrförmigen Endstücks ist.

7. Anordnung nach einem der Ansprüche 3 bis 6, **dadurch gekennzeichnet, dass** der metallische Mantel (76) ein Metallgeflecht ist.

8. Anordnung nach Anspruch 2, **dadurch gekennzeichnet, dass** die Wärmeableitmittel ringförmige Nuten (42) aufweisen, die abwechselnd mit ringförmigen Rippen (44) des Endstücks (34) entlang der Achse des Endstücks (34) angeordnet sind.

9. Gehäuse, insbesondere Zwischengehäuse für Triebwerke, enthaltend eine Anordnung nach einem der Ansprüche 1 bis 8, wobei die Wand eine im Wesentlichen zylindrische Wand (28) ist, welche die radial innere Strömungsfläche eines Gasstroms begrenzt.

10. Turbotriebwerk, wie etwa Turbostrahltriebwerk, **dadurch gekennzeichnet, dass** es eine Anordnung nach einem der Ansprüche 1 bis 8 oder ein Gehäuse nach Anspruch 9 aufweist.

## Claims

1. An assembly for passing an electrical harness through a wall (28), comprising a tubular metal end piece (34) passing right through the wall (28) and housing the electrical harness, a sleeve made from heat-shrinkable material (38, 64, 66) extending around an end part (40, 50) of the tubular end piece (34) and of the electrical harness, **characterised in that** it comprises means (42, 44, 46, 76) for extracting heat from the tubular end piece that are arranged on the side of the end piece (34) surrounded by the heat-shrinkable sleeve (38, 64, 66).

2. An assembly according to claim 1, **characterised in that** the tubular end piece (34) comprises an annular collar (36) applied to the wall (28) and disposed between the wall (28) and said heat-extraction means.

3. An assembly according to claim 1 or claim 2, **characterised in that** the heat-extraction means comprise an external covering metal sheath (46, 76) entirely surrounding the heat-shrinkable sleeve (38, 64, 66) and fixed to a first end (78) situated on the wall side by clamping on the tubular end piece (34).

4. An assembly according to claim 3, **characterised in that** said first end (78) of the covering metal sheath (76) is folded on itself radially inwards and clamped by a first member (82) interposed radially between the first curved end (78) and the remainder of the covering metal sheath (76).

5. An assembly according to claim 4, **characterised in that** a second clamping member (84) is applied to a second end (80) of the covering metal sheath (76) opposite to the first end (78) that is in contact with the heat-shrinkable sleeve (64, 66).

6. An assembly according to any of claims 3 to 5, **characterised in that** said covering metal sheath (76) is produced from a material the thermal conductivity of which is greater than that of the tubular end piece.

7. An assembly according to any of claims 3 to 6, **characterised in that** the metal sheath (76) is a metal braid.

8. An assembly according to claim 2, **characterised in that** the heat-extraction means comprise annular grooves (42) disposed in alternation along the axis of the end piece (34) with annular ribs (44) on the end piece (34).

9. A casing, in particular an intermediate casing for a turbine engine, comprising an assembly according to any of claims 1 to 8, in which said wall is a substantially cylindrical wall (28) delimiting the radially internal flow surface of a gas flow.

10. A turbine engine, such as a turbojet engine, **characterised in that** it comprises an assembly according to any of claims 1 to 8 or a casing according to claim 9.
